# EUROPEAN PATENT APPLICATION

(11) **EP 0 733 809 A1**
(43) Date of publication of application: **25.09.1996**
(21) Application number: 96301871.8
(22) Date of filing: 19.03.1996
(51) Int. Cl.: F04D 29/64, F04D 29/58, B60K 11/04, F01P 11/10

(54) **Support bracket**

(30) Priority: 21.03.1995 GB 9505712
(71) Applicant: VALEO UK, Birmingham B32 3DE (GB)
(72) Inventor: Pearson, Rupert G., Valeo UK, Engine Cooling Div., Birmingham B32 3DE (GB)
(74) Representative: Neobard, William John

(57) **Abstract**

A support bracket has a fan motor securing portion (1), attachments (2,3) for securing the bracket to a structure such as a motor vehicle and heat exchanger attachments (4,5).

The bracket serves simultaneously to support the fan, the fan motor and the heat exchanger, e.g. a radiator or condensor, and to secure those components to the structure.

## Description

The present invention relates to a support bracket for mounting an axial flow fan, and more particularly but not exclusively to a support bracket for mounting an axial flow fan to the structure of a motor vehicle.

Axial flow fans are well known in the art and consist of a fan hub portion and plural blade members, each blade member having a root portion and a tip portion, the root portion of each blade being secured to the hub portion such that the blades extend generally radially from the hub portion. Axial flow fans are commonly used in association with a heat exchanger, for example in motor vehicle cooling systems, motor vehicle air conditioning systems and other air conditioning systems. According to the requirements of the particular application, the fan may be mounted so as to draw air through a heat exchanger, or so as to blow air through the heat exchanger. A third alternative occurs where the fan is sandwiched between two heat exchangers, in which case the fan acts to draw air through a first heat exchanger and to blow air through the second heat exchanger.

Axial flow fans have usually been driven directly by the associated internal combustion engine, via, for example, a belt system, when used in cooling arrangements. However it has now become conventional to drive the fan from an electric motor having a shaft which serves both to support the above-mentioned hub portion, and to rotate the fan. Typically the electric motor, whether the application is for engine cooling, or air conditioning, is operated intermittently under thermostatic control.

It is known to mount the fan to a heat exchanger, such as a vehicle radiator or an air conditioning condenser, which heat exchanger is itself secured to an associated relatively massive structure, such as the bodywork of a vehicle with which the heat exchanger is to be associated. In the case of combined engine cooling/air conditioning systems, it is known to secure the cooling radiator to the vehicle structure, to mount the associated condenser to the radiator and to mount the fan between the two heat exchangers. Finally it is known to mount the condenser to the vehicle structure, and the radiator to the vehicle structure, and to secure the fan to one or other.

Known arrangements produce assembly problems due to the need for separate mounting of individual components. A predetermined minimum distance is required between a fan and an associated condenser to provide optimum air flow through the condenser. However, a larger nominal spacing between the fan and condenser is required, so that where dimensions of components approach the extremes of their tolerances, the minimum distance can still be achieved. Known arrangements also require complicated in-vehicle assembly, which is undesirable due to the difficulties of working in confined spaces. Finally the low physical strength of heat exchangers may cause difficulties where the relatively high mass of a fan with its associated motor is to be mounted to the heat exchanger.

It is accordingly an object of the present invention to at least partially mitigate some of the above difficulties.

According to the present invention there is provided a support bracket for supporting a fan motor and an associated heat exchanger within a structure, comprising a fan motor securing portion, for securing an electric motor for supporting and driving an axial flow fan, an attachment portion for securing the support bracket to said associated structure, and a heat exchanger mounting portion for mounting a heat exchanger to the support bracket, whereby a heat exchanger mounted to the fan mounting arrangement is secured to the associated structure by means of the support bracket.

Advantageously the support bracket further comprises a first annular structure defining a circular aperture, and the fan motor securing portion comprises plural arms, said arms extending radially inward of the circular aperture for supporting the electric motor, whereby the fan is disposed within the circular aperture.

Conveniently the fan motor securing portion further comprises a second generally-annular structure, the electric motor being secured to the second generally-annular structure, and the arms extend to the second annular structure, and are secured thereto.

Preferably three arms are provided.

Conveniently the fan motor securing portion defines a first plane and the heat exchanger mounting portion comprises a heat exchanger support portion having a heat exchanger support surface disposed in a second plane perpendicular to the first plane of the fan motor securing portion, whereby a heat exchanger may be supported in a third plane substantially parallel to the said first plane, but spaced from the first plane by a first predetermined distance.

Advantageously the heat exchanger mounting portion further comprises a heat exchanger securing portion for securing the heat exchanger to the support bracket.

Preferably the heat exchanger securing portion comprises a lug depending from the first annular support structure, and having a hole therethrough for an attachment member of said heat exchanger.

Conveniently the attachment member is a bolt.

Advantageously the lug has a surface portion disposed in said third plane whereby the heat exchanger may be supported in said third plane.

Preferably the support bracket comprises a heat exchanger retaining member depending from the first annular structure and extending in said second plane, whereby said heat exchanger retaining member defines said heat exchanger support surface, said heat exchanger retaining member further having a lip portion at a position remote from said first annular structure whereby said heat exchanger retaining member may engage a heat exchanger.

Preferably the first annular structure is a fan tip-enclosing member extending between said first and second planes for constraining air flow produced by a fan, mounted by the fan mounting arrangement, to flow through an associated heat exchanger.

According to a second aspect of the present invention there is provided a combination of a heat exchanger, a fan, which comprises fan blades and an electric motor for supporting and driving the fan, and a support bracket, the support bracket comprising a fan motor securing portion securing said electric motor, an attachment portion for securing the support bracket to an associated structure, and a heat exchanger mounting portion mounting the heat exchanger to the support bracket, whereby the heat exchanger may be secured to the associated structure by means of the support bracket.

Advantageously, the heat exchanger is a parallel flow condensor.

According to a further aspect of the present invention there is provided a method of mounting a heat exchanger to an associated structure comprising:-
a) providing an axial flow fan having an electric drive motor for supporting and driving said fan;
b) providing a support bracket comprising a fan motor securing portion, attachment portions for securing the support bracket to the associated structure, and a heat exchanger mounting portion for mounting a heat exchanger thereto;
c) securing the fan motor to the fan motor securing portion of the support bracket;
d) mounting a heat exchanger to the heat exchanger mounting portion of the support bracket; and
e) securing the support bracket via said attachment portions to the associated structure, whereby the heat exchanger is mounted to the structure via the support bracket.

An embodiment of the invention will now be described with respect to the accompanying drawings in which:-

Figure 1 shows a plan view of a support bracket in accordance with the invention.

Figure 2 shows a cross section through the support bracket of Figure 1 taken along the line II-II' of Figure 1.

Figure 3 shows a side elevation of the support bracket of Figure 1, taken in the direction III shown in Figure 1.

Figure 4 shows a dual support bracket in accordance with the invention, shown in combination with an associated heat exchanger.

Figure 5 shows an end view of the support bracket of Figure 4 in the direction V of Figure 4.

Figure 6(a) shows a plan view of an exemplary fan for use with the invention.

Figure 6(b) shows a cross-section of the fan of Figure 6(a) along line VI-VI'.

In the figures like reference numerals indicate like parts.

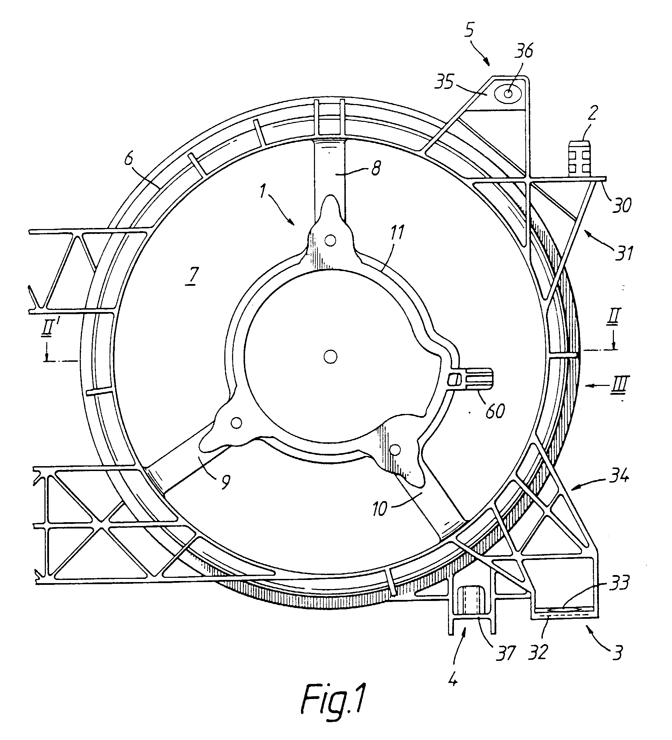

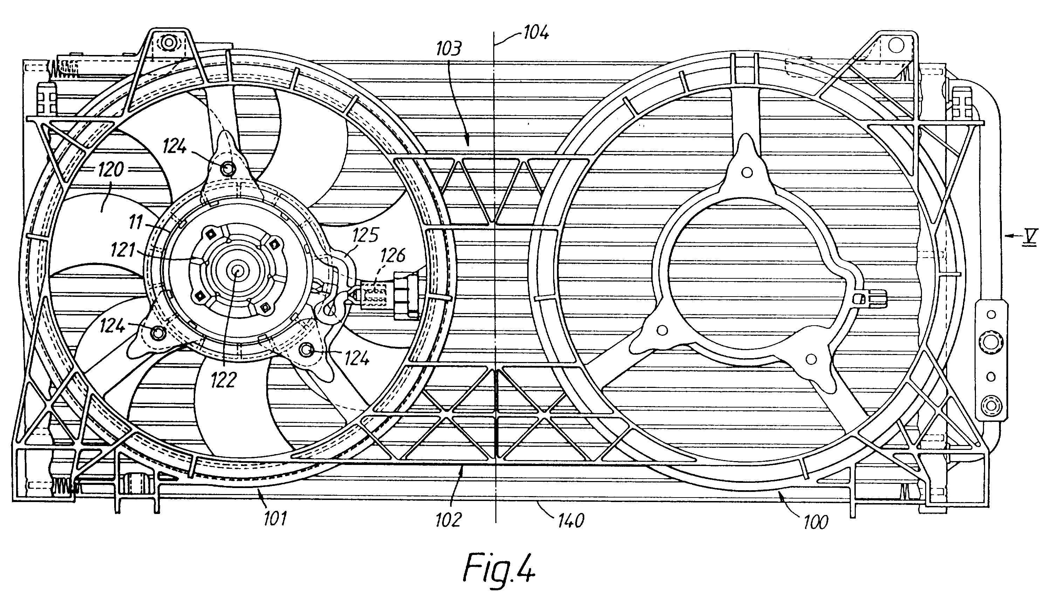

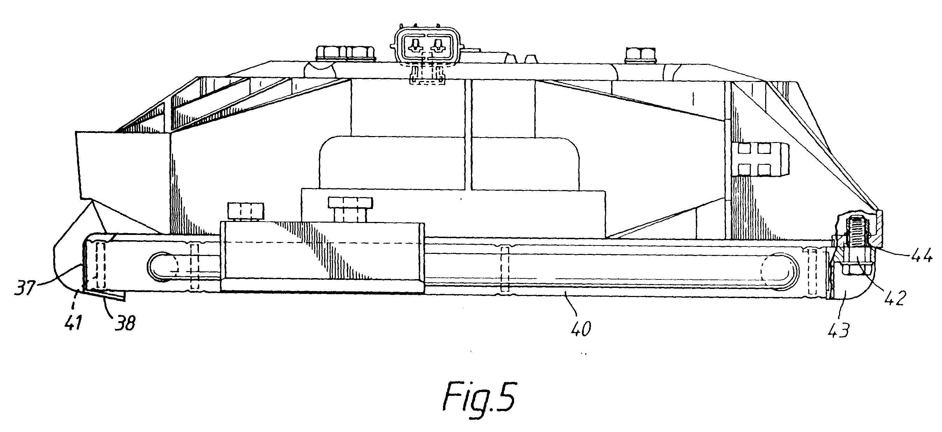

Referring now to Figure 1, a support bracket in accordance with the invention, also known herein as a fan mounting arrangement, has a fan motor securing portion (1), attachment portions (2,3) for securing the fan mounting arrangement to an associated structure such as a vehicle body and a heat exchanger mounting portion (4,5) for mounting a heat exchanger to the fan mounting arrangement. The fan mounting arrangement further consists of a first annular structure (6) which defines a circular aperture (7). The fan motor securing portion (1) has three arms (8,9,10) extending radially inward into the circular aperture to a second generally annular structure (11) which, in use, is secured to an electric motor (see Figures 4 and 5), the electric motor supporting and driving an axial flow fan by the shaft of the electric motor. Three arms are selected, to avoid acoustic resonance effects.

The second annular structure (11) may be secured to the arms (8,9,10) via suitable bolts, as will be described later herein. The second annular structure (11) has a finger portion (60) extending generally radially outwardly therefrom and generally coplanar with the second annular support structure.

The finger portion (60) is configured to allow a terminal member to be secured thereto, the terminal member being connected to the power leads of a fan motor which is supported by the fan motor securing portion.

The arms (8,9,10) are disposed substantially radially within the circular aperture (7), but are spaced irregularly about the circumference of the first annular structure (6). The irregular disposition of the arms (8,9,10) prevents acoustic coincidence between the arms which could lead to resonance effects that in turn could lead to vibration and noise. Alternatively, in contrast to the arms (8,9,10) shown in Figure 1, which are substantially straight, one or more of the arms could be other than straight, and one or more of the arms, whether straight or not, may extend at an angle to a radius of the first annular structure (6).

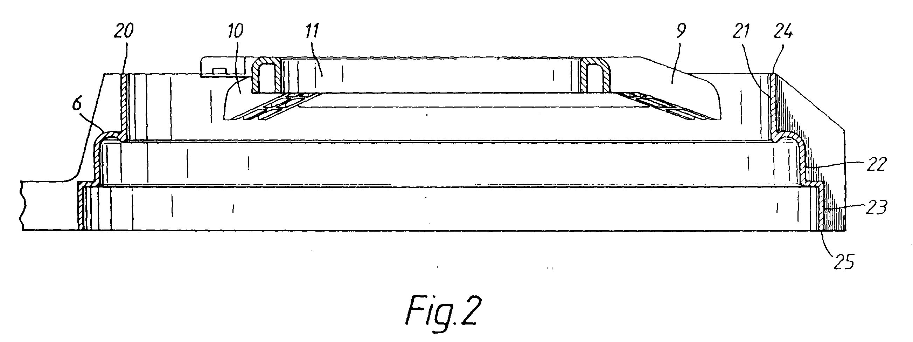

Referring now to Figure 2, the first annular structure (6) of this embodiment has a wall (20) which, in a first portion (21) thereof defines a first cylindrical aperture having a first diameter, in a second portion (22) defines a second cylindrical aperture having a second diameter greater than that of the first aperture and in a third portion (23) defines a third cylindrical aperture having a third diameter greater than that of the second aperture. Thus, the first annular structure provides an internal periphery which steps outwardly from a first face portion (24) to a second opposite face portion (25).

In use, the first face portion (24) defines the periphery of an air inlet for air to be blown by a fan through an associated heat exchanger and the second face portion (25) is in close proximity to the heat exchanger, such as a parallel flow condensor. In the described embodiment, the fan is a so-called "pusher fan", adapted to draw air in from the air inlet defined by the first face portion (24), through the first circular aperture and out through the third aperture defined by the third wall portion (23). The fan motor securing portion (11) is disposed in a plane close to and parallel to the first face portion (24).

It will be appreciated that, where the condenser is disposed in front of a radiator such that air flow through the condenser also passes through the radiator, there may additionally be provided a so-called "puller fan" for drawing air through the radiator. This "puller fan" will, in the circumstances described, effect air flow through the condenser as well.

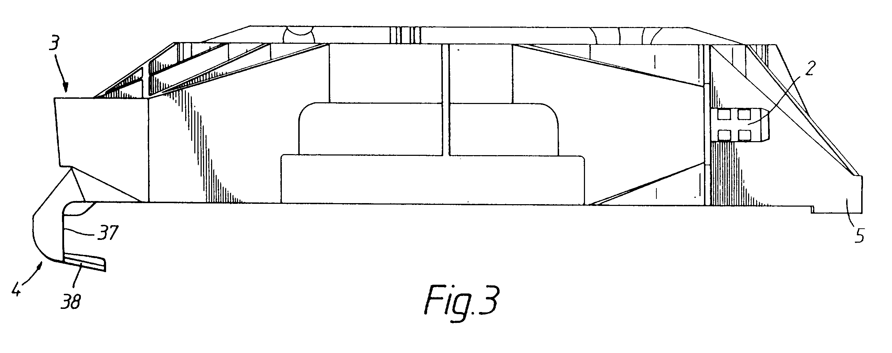

Referring now to Figures 1 and 3, the attachment portions (2,3) for securing the fan mounting arrangements to the associated vehicle body include a plug member (2) upstanding from a plate member (30) secured to the first annular structure (6), the plate member (30) being strengthened by a lever-lattice structure (31). The attachment portion further has a second plate member (32) having a fixing hole (33) therethrough, the second plate member (32) extending generally parallel to first plate member (30), and being secured to the first annular structure (6) via a second lever-lattice structure (34). The first lever lattice structure (31) also supports a third plate member (35), which extends generally perpendicular to the first plate member (30), and has a heat exchanger mounting hole (36) therethrough. The third plate member (35) at the hole (36) constitute a heat exchanger mounting portion (5). The second lever-lattice structure (34) also supports a second heat exchanger mounting portion (4) which has a member (37) extending generally parallel to the first plate member (31) and the second plate member (32), and perpendicular to the above-described plane of the fan motor securing portion (1). The member (37) extends beyond the second face portion (25) of the first annular structure (see Figure 2) and provides a support surface for a heat exchanger. At the end of the member (37) which is remote from the first annular structure, there is provided an upstanding lip member (38) which serves to retain the above-mentioned heat exchanger.

Referring now to Figure 5, a heat exchanger (40) is shown assembled to the fan mounting arrangement. As viewed in Figure 5, the lower edge portion (41) of the heat exchanger (40) rests on the support surface of the member (37), and is retained thereon by the upstanding lip member (38). A suitable bolt (42) passes through the hole (36) of the upper heat exchanger mounting portion (5) and through an upper-edge securing portion (43) of the heat exchanger (40). To provide resilience, the bolt (42) has a surrounding rubber or otherwise resilient bushing (44) interposed between it and the surrounding third plate member (35).

Referring now to Figure 4, a second embodiment of the fan mounting arrangement allows for two fans to be secured to adjacent portions of the face of a heat exchanger (140). The fan mounting arrangement consists of a first fan mounting arrangement (100) which is the same as that described herein with reference to Figures 1-4, and a second fan mounting arrangement (101). The second fan mounting arrangement (101) is secured to the first fan mounting arrangement (100) by two lattice structures (102,103) which extend in the plane of the fan motor securing portions of the two fan mounting arrangements. The second fan mounting arrangement (101) is a mirror image of the first fan mounting arrangement (100) taken along a center line (104).

As will be seen in Figure 4, the second fan mounting arrangement (101) is illustrated with a fan (120) and associated motor (121) mounted thereto. The first fan mounting arrangement (100), for ease of comparison with the arrangements shown in Figures 1-4, does not include such a fan and motor. However it will be understood that in operation both fan mounting arrangements (100,101) may be furnished with a fan and motor. Where required, both fan mounting arrangements have a fan and motor, but under other circumstances, only one fan and motor may be used. The fan (120) consists of plural blade members extending generally radially from a fan axis (122). As will be seen, the axis (122) of the fan is formed by the drive shaft of the motor (121). The external periphery of the motor (121) is secured to the second annular structure fan motor securing portion (11), which is mounted to the arms (8,9,10) via suitable bolts (124).

As shown, wires (125) extend to a terminal member (126) which is secured to the finger portion (60) of the second annular structure (11).

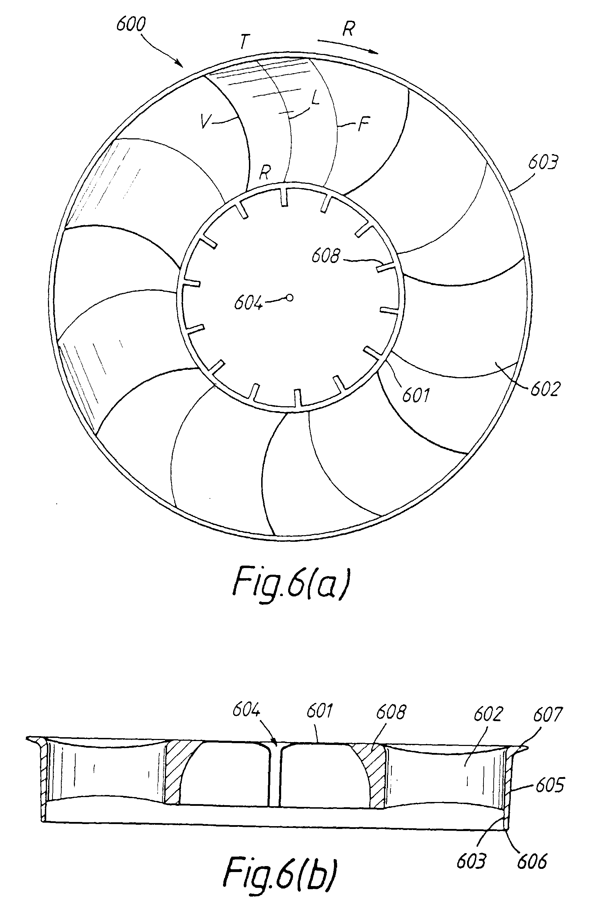

Referring now to Figure 6(a) and 6(b), a fan (600) suitable for use with the fan mounting arrangement of the invention, is shown. The fan, which is an axial flow fan for blowing air through an associated heat exchanger (40) (see Figures 4 and 5) has a hub portion (601), plural blade members (602) and a blade-tip support ring (603). The hub member (601) is a generally bowl-shaped member having a central hole (604) for a motor shaft, which shaft defines the fan axis. The plural blade members (602), seven in number in the illustrated fan, each have a root portion and a tip portion. The root portion of each blade is secured to the hub member (601), so that the blades extend generally radially of the fan axis (604), and the tip regions of each blade is secured to the blade-tip support ring (603). The fan rotates clockwise as shown by the arrow R. The blades are rearwardly skewed in that the medial line L of each blade at the tip T is behind the location of the medial line at the root R. The leading edge F is curved in the same sense as the trailing edge V.

Referring to Figure 6(b), the blade-tip support ring has a first cylindrical portion (605) which extends from a rear-most extremity (606) situated axially behind the rear-most extremity of the tip portion of each blade (602), and an outwardly-curved lip portion (607) disposed substantially at the four-most extremity of each blade (602). The radially-outwardly curved lip portion (607) is adapted to be disposed, in use, within the largest diameter portion (23) of the first annular structure (6), and the cylindrical portion (605) then extends parallel to and in close proximity with the intermediate diameter portion (22) of the first annular structure (6). The outer periphery of the blade tip support ring (603), together with the inner periphery of the first annular structure (6) define a series of narrow passageways which reduce the possibility of tip vortices around the fan.

An alternative fan arrangement (not shown) does not use a blade-tip support ring. Where such an unsupported fan is used, the internal configuration of the first annular structure (6) may be less complex. For example the first annular structure may have only a single outward step in its internal diameter, the fan blade tip regions then being disposed within the region of greater diameter.

Returning to Figure 6(a), it will be noted that the hub member (601) has plural radially-extending rib portions (608). The rib portions (608) reinforce the physical structure of the hub member (601), and may also play a part in moving air within the hub portidn, thus enhancing the flow of cooling air through an associated electric motor.

To assemble the fan mounting arrangement the following steps are undertaken:-

First the fans are secured to the associated fan motor securing portions (1), and the fan motor securing portions are bolted to the arms (8,9,10). Next the heat exchanger is fitted into the lower heat exchanger mounting portion (4) and then the bolt is attached, using a resilient bushing, to the upper heat exchanger mounting portion (5). The upper attachment portion (2) for securing the fan mounting arrangement to the vehicle structure is then disposed, via an intervening resilient bushing, into a suitable hole associated with the vehicle structure - for example a depending bracket, and the lower attachment portion is located, via a suitable resilient bushing, over an upstanding pin member associated with the vehicle structure.

The support bracket of the present invention is especially suitable for fabrication by injection moulding of plastics material.

The support bracket of the present invention provides a secure attachment of a heat exchanger, via the fan mounting arrangement, which accordingly ensures the desired minimum clearance between the fan and the heat exchanger. The sequential nature of assembly of the support bracket into an associated structure avoids the need for working in a confined space. The combination of the cradle provided by the lower heat exchanger mounting portion and the bolt of the upper heat exchanger mounting portion provides both simple assembly and secure attachments.

Where the support bracket is provided by a single injection moulded item, the lack of multiple support members means that only a single allowance for tolerances need be provided. The use of injection moulding which in itself is capable of providing reduced tolerance variations from part to part, as a consequence allows this single tolerance to be reduced.

## Claims

1. A support bracket for supporting a fan motor and an associated heat exchanger within a structure, comprising a fan motor securing portion, for securing an electric motor for supporting and driving an axial flow fan, an attachment portion for securing the support bracket to said associated structure, and a heat exchanger mounting portion for mounting a heat exchanger to the support bracket, whereby a heat exchanger mounted to the fan mounting arrangement is secured to the associated structure by means of the support bracket.

2. A support bracket as claimed in claim 1 further comprising a first annular structure defining a circular aperture, and the fan motor securing portion comprises plural arms, said arms extending radially inward of the circular aperture for supporting the electric motor, whereby the fan is disposed within the circular aperture.

3. A support bracket as claimed in claim 2 wherein the fan motor securing portion further comprises a second generally-annular structure, the electric motor being secured to the second generally-annular structure, and the arms extend to the second annular structure, and are secured thereto.

4. A support bracket as claimed in claim 2 or 3 wherein three arms are provided.

5. A support bracket as claimed in any preceding claim wherein the fan motor securing portion defines a first plane and the heat exchanger mounting portion comprises a heat exchanger support portion having a heat exchanger support surface disposed in a second plane perpendicular to the first plane of the fan motor securing portion, whereby a heat exchanger may be supported in a third plane substantially parallel to the said first plane, but spaced from the first plane by a first predetermined distance.

6. A support bracket as claimed in any preceding claim wherein the heat exchanger mounting portion further comprises a heat exchanger securing portion for securing the heat exchanger to the support bracket.

7. A support bracket as claimed in claim 6 wherein the heat exchanger securing portion comprises a lug depending from the first annular support structure, and having a hole therethrough for an attachment member of said heat exchanger.

8. A support bracket as claimed in claim 7 wherein the attachment member is a bolt.

9. A support bracket as claimed in claims 7 or 8 wherein the lug has a surface portion disposed in said third plane, whereby the heat exchanger may be supported in said third plane.

10. A support bracket as claimed in any one of claims 5-9 further comprising a heat exchanger retaining member depending from the first annular structure and extending in said second plane, whereby said heat exchanger retaining member defines said heat exchanger support surface, said heat exchanger retaining member further having a lip portion at a position remote from said first annular structure whereby said heat exchanger retaining member may engage a heat exchanger.

11. A support bracket as claimed in any one of claims 5-10 wherein the first annular structure is a fan tip-enclosing member extending between said first and second planes for constraining air flow produced by a fan, mounted by the fan mounting arrangement, to flow through an associated heat exchanger.

12. A combination of a heat exchanger, a fan, which comprises fan blades and an electric motor for supporting and driving the fan, and a support bracket, the support bracket comprising a fan motor securing portion securing said electric motor, an attachment portion for securing the support bracket to an associated structure, and a heat exchanger mounting portion mounting the heat exchanger to the support bracket, whereby the heat exchanger may be secured to the associated structure by means of the support bracket.

13. A combination as claimed in claim 12 wherein the heat exchanger is a parallel flow condenser.

14. A method of mounting a heat exchanger to an associated structure comprising:-
a) providing an axial flow fan having an electric drive motor for supporting and driving said fan;
b) providing a support bracket comprising a fan motor securing portion, attachment portions for securing the support bracket to the associated structure, and a heat exchanger mounting portion for mounting a heat exchanger thereto;
c) securing the fan motor to the fan motor securing portion of the support bracket;
d) mounting a heat exchanger to the heat exchanger mounting portion of the support bracket; and
e) securing the support bracket via said attachment portions to the associated structure, whereby the heat exchanger is mounted to the structure via the support bracket.
